# EUROPÄISCHE PATENTSCHRIFT

(11) **EP 3 121 075 B1**
(45) Veröffentlichungstag und Bekanntmachung des Hinweises auf die Patenterteilung: **07.11.2018**
(21) Anmeldenummer: 15177950.1
(22) Anmeldetag: 22.07.2015
(51) Int. Cl.: B60T 7/20

(54) **ABRISSVENTIL**
PULL-OFF VALVE
SOUPAPE A DECHIREMENT

(43) Veröffentlichungstag der Anmeldung: 25.01.2017
(73) Patentinhaber: Haldex Brake Products Aktiebolag, 261 24 Landskrona (SE)
(72) Erfinder: Helmut, Maltry, 69226 Nussloch (DE)
(74) Vertreter: REHBERG HÜPPE + PARTNER

(56) Entgegenhaltungen:
- EP-A1- 0 832 803
- EP-A2- 2 631 131
- DE-A1-102008 048 208
- GB-A- 2 500 221

## Beschreibung

### TECHNISCHES GEBIET DER ERFINDUNG

Die Erfindung betrifft ein Abrissventil, eine Gruppe derartiger Abrissventile sowie eine Zugfahrzeug-Ventileinheit mit einem derartigen Abrissventil. Vorzugsweise finden diese Einsatz für Zugfahrzeuge wie Schlepper, insbesondere landwirtschaftliche Zugfahrzeuge oder Traktoren, leichte hydraulisch gebremste Geländefahrzeuge, welche mit Druckluftanlagen für Anhänger ausgestattet sind oder nachgerüstet werden, schnelle hydraulisch gebremste Transporter mit pneumatisch gebremsten Anhängern o. ä.

### STAND DER TECHNIK

Anhänger mit pneumatischer Bremsanlage sind üblicherweise über einen Kupplungskopf Vorrat sowie einen Kupplungskopf Bremse pneumatisch mit einem Zugfahrzeug gekoppelt. Der Kupplungskopf Vorrat dient hierbei der Bereitstellung eines Vorrats- oder Versorgungsdrucks für den Anhänger, während der Kupplungskopf Bremse der Übertragung eines pneumatischen Bremsdrucks entsprechend dem vorzugsweise vom Fahrer vorgegebenen Bremswunsch über eine Bremssteuerleitung dient mit dem Ziel, die Abbremsung des Anhängers an die Abbremsung des Zugfahrzeugs anzupassen. Bei einem Abriss der über den Kupplungskopf Bremse gekoppelten Bremssteuerleitung oder einer anderweitigen Leckage ist die pneumatische Übertragung des pneumatischen Bremsdrucks und damit des Bremswunsches von dem Zugfahrzeug zu dem Anhänger nicht mehr möglich, womit auch eine Abbremsung des Anhängers ohne Weiteres nicht mehr möglich ist. Kommt es gleichzeitig zu einem Abriss auch der mechanischen Kupplung zwischen Anhänger und Zugfahrzeug, würde sich der Anhänger (ohne Einsatz eines im folgenden beschriebenen Anhängerbremsventils mit Notbremsfunktion) frei und ungebremst bewegen, womit dieser beträchtlichen Schaden anrichten kann. Um dies zu vermeiden, werden pneumatische Bremsanlagen eines Anhängers mit einem Anhängerbremsventil ausgestattet, welches über eine Notbremsfunktion verfügt. Die Notbremsfunktion führt bei Einbruch des Drucks in der Vorratsleitung insbesondere infolge einer Leckage derselben automatisch eine Notbremsung herbei. Auch wenn die Vorratsleitung intakt ist, führt der Abriss der Bremssteuerleitung oder eine anderweitige Leckage im Bereich derselben dazu, dass Druckluft eines dem Anhängerbremskreis zugeordneten Vorratsbehälters des Zugfahrzeugs über die abgerissene Bremssteuerleitung oder die Leckage in derselben entweicht, womit es dann auch zu einem Druckabfall in der Vorratsleitung kommt, welcher dann die Notbremsfunktion auslösen kann. Hierbei hängt der Zeitpunkt des Auslösens der Notbremsfunktion des Anhängers grundsätzlich von der Schnelligkeit der Entlüftung des Vorratsbehälters ab.

Für Zugfahrzeuge mit pneumatischer Bremsanlage, insbesondere Lastkraftwagen, finden sogenannte Abrissventile Einsatz, die grundsätzlich ungedrosselt den Vorratsbehälter des Zugfahrzeugs mit dem Kupplungskopf Vorrat verbinden. Bei einem Abriss der Bremssteuerleitung oder einer Leckage in dieser schaltet das Abrissventil um in eine zweite Betriebsstellung, in welcher der Vorratsbehälter z. B. über eine Drossel mit dem Kupplungskopf Vorrat verbunden ist. Kommt es dann zu einer Entlüftung des Vorratsbehälters infolge des Abrisses oder der Leckage der Bremssteuerleitung, hat dies eine weitere gedrosselte Belüftung der Vorratsleitung über die Drossel des Abrissventils zur Folge, sodass konstruktiv durch die Wahl des Drosselquerschnitts vorbestimmt werden kann, wie schnell bei einem Defekt in der Bremssteuerleitung die Entlüftung erfolgt und damit das Auslösen der Notbremsfunktion erfolgt.

Aus einer Einbauanleitung des Unternehmens Graubremse GmbH aus dem Jahr 1977 mit der Bezeichnung "G 813: *2*/*2-Wegeventil pneum. betätigt mit Drosselstellung NW 7*/*NW 2"* ist ein Abrissventil in Schieberbauart bekannt, bei welchem ein Vorratsanschluss, der mit einem Vorratsbehälter des Zugfahrzeugs verbindbar ist, und ein Ausgangsanschluss für einen Kupplungskopf Vorrat je nach Betriebsstellung eines Ventilkörpers ungedrosselt oder gedrosselt miteinander verbunden sind. Hierbei wird der Ventilkörper über eine Feder in eine erste Betriebsstellung beaufschlagt. In der ersten Betriebsstellung ist der Vorratsanschluss ungedrosselt mit dem Ausgangsanschluss für den Kupplungskopf Vorrat verbunden ist. Die erste Betriebsstellung wird dabei unabhängig davon eingenommen, ob eine Betriebsbremsung erfolgt oder nicht. Die beiden Stirnflächen des Ventilkörpers bilden jeweils entgegengesetzt zueinander wirkende Steuerflächen aus. Auf eine erste Steuerfläche, deren Wirkrichtung mit einer Erhöhung der Beaufschlagung der Feder korreliert, wirkt der pneumatische Bremsdruck eines pneumatischen Betriebsbremskreises des Zugfahrzeugs, während auf die andere zweite Steuerfläche der von dem Anhängersteuerventil ausgesteuerte und für die Bremssteuerleitung mit dem Kupplungskopf Bremse bestimmte pneumatische Bremsdruck wirkt. Ohne Abriss der Bremssteuerleitung heben sich die auf die Steuerflächen wirkenden Kräfte (teilweise oder vollständig) auf, sodass die Feder den Ventilkörper in der ungedrosselten ersten Betriebsstellung hält, was unabhängig davon ist, ob eine Betätigung der Betriebsbremse erfolgt oder nicht. Bricht hingegen der pneumatische Bremsdruck in der Bremssteuerleitung infolge eines Abrisses ein, wird die zweite Steuerfläche entlüftet. Der auf die erste Steuerfläche wirkende pneumatische Bremsdruck des Zugfahrzeugs überführt bei einer Betätigung der Betriebsbremse dann den Ventilkörper entgegen der Wirkung der Feder in die zweite Betriebsstellung, in welcher eine Drossel wirksam ist. Damit erfolgt lediglich eine gedrosselte Nachfüllung der Druckluftanlage des Anhängers, welche einer gleichzeitigen Entlüftung durch die defekte Bremssteuerleitung entgegenwirkt, so dass es zu einem Druckabfall kommt, dessen Schnelligkeit von der Drosselcharakteristik der Drossel abhängt.

DE 10 2008 048 208 A1 offenbart eine Bremseinrichtung für ein hydraulisch gebremstes Zugfahrzeug mit einem pneumatisch gebremsten Anhänger. In der Bremseinrichtung kann die Beaufschlagung einer Bremse des Anhängers sowohl über einen elektro-pneumatischen Beaufschlagungspfad als auch über einen hydraulisch-pneumatischen Beaufschlagungspfad gesteuert werden. Für eine Ausführungsform von DE 10 2008 048 208 A1 wird dies ermöglicht über eine Ventileinheit, in welcher ein Ein-/Auslassventil gesteuert wird über einen Ventilkörper, welcher betätigt wird durch zwei mechanisch hintereinandergeschaltete Kolben. Der erste Kolben ist auf einer Seite mit einer Kraft entsprechend dem hydraulischen Bremsdruck des Zugfahrzeugs beaufschlagt, während dieser auf der anderen Seite beaufschlagt ist von einem in dem elektro-pneumatischen Beaufschlagungspfad ausgesteuerten Steuerdruck. Hingegen ist der zweite Kolben auf einer Seite mit dem vorgenannten, in dem elektro-pneumatischen Beaufschlagungspfad ausgesteuerten Steuerdruck beaufschlagt, während dieser auf der anderen Seite beaufschlagt ist mit einem für der Kupplungskopf Bremse ausgesteuerten Druck. Kommt es zu einem Abriss der Bremsleitung zwischen Anhänger und Zugfahrzeug im Bereich des Kupplungskopfs Bremse, erfolgt die Entlastung des zweiten Kolbens auf der Unterseite, was infolge des auf die Oberseite des zweiten Kolbens wirkenden Steuerdrucks und/oder der auf die Oberseite des ersten Kolbens wirkenden, von der hydraulischen Beaufschlagung durch den hydraulischen Bremsdruck wirkenden Kraft dazu führt, dass das Ein-/Auslassventil seine Einlassstellung einnimmt. In dieser Einlassstellung verbindet das Ein-/Auslassventil den Kupplungskopf Vorrat mit dem Defekt der Bremsleitung, womit der Kupplungskopf Vorrat entlüftet wird und eine Notbremsfunktion eines Anhängerbremsventils ausgelöst werden kann. Um eine Entlüftung eines an der Ventileinheit angeschlossenen Behälters über den Defekt in der Bremsleitung zwischen Anhänger und Zugfahrzeug zu vermeiden, ist in die Ventileinheit ein Abrissventil integriert, welches in der Abrissstellung eine Sperrstellung einnimmt, in welcher dieses die Verbindung in der Ventileinheit zwischen der Bremsleitung zwischen Anhänger und Zugfahrzeug und dem Vorratsbehälter absperrt.

EP 2 631 131 A2 offenbart einen Kupplungskopf, bei welchem eine Kupplungskopfleitung, welche die Druckluft führt, welche über den Kupplungskopf übertragen werden soll, mit einer Zweigleitung verbunden ist. Zwischen der Kupplungskopfleitung und der Zweigleitung ist ein Ventil angeordnet, welches bewegungsgesteuert mit dem Ankuppeln des Kupplungskopfes automatisch in eine Öffnungsstellung überführt wird. In der Zweigleitung ist ein Sensor angeordnet, der den Druck in der Zweigleitung (und damit für angekuppelten Kupplungskopf auch den Druck in der Kupplungskopfleitung) erfasst. Über den Sensor kann ein Messsignal erzeugt werden, anhand dessen erkannt werden kann, ob der Kupplungskopf an einen Gegen-Kupplungskopf angekuppelt ist. Andererseits kann mittels des Sensors anhand eines Druckabfalls erkannt werden, wenn es zu einem Defekt in einer zu dem Kupplungskopf führenden Bremsleitung kommt. Das Messsignal des Sensors wird über eine elektrische Leitung einer Steuereinheit eines Anhängersteuerventils zugeführt.

### AUFGABE DER ERFINDUNG

Der vorliegenden Erfindung liegt die Aufgabe zugrunde, ein Abrissventil, insbesondere ein Schlepper-Abrissventil, vorzuschlagen, welches den Druckverhältnissen in einer hydraulischen Bremsanlage eines Zugfahrzeugs Rechnung trägt. Des Weiteren liegt der Erfindung die Aufgabe zugrunde, Abrissventile vorzuschlagen, welche für unterschiedliche Betriebsbedingungen und Einbauumgebungen in unterschiedlichen Zugfahrzeugen und/oder mit unterschiedlichen hydraulischen Medien, bspw. Bremsflüssigkeiten oder Mineralöl, geeignet sind. Schließlich liegt der Erfindung die Aufgabe zugrunde, eine vorteilhafte Zugfahrzeug-Ventileinheit vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht zunächst auf der Erkenntnis, dass als Abrissventil grundsätzlich ein Abrissventil eingesetzt werden soll, wie dieses an sich für den Anschluss von zwei pneumatischen Steuerleitungen wie eingangs erläutert bekannt ist. Allerdings wäre bei einem Einsatz eines derartigen Abrissventils für ein Zugfahrzeug mit hydraulischer Bremsanlage, insbesondere einen Schlepper, dann die erste Steuerfläche mit dem unter Umständen sehr hohen hydraulischen Bremsdruck der hydraulischen Bremsanlage des Zugfahrzeugs beaufschlagt, während die zweite Steuerfläche mit dem von dem Anhängersteuerventil ausgesteuerten deutlich kleineren pneumatischen Bremsdruck beaufschlagt wäre. Die Beaufschlagung der ersten Steuerfläche mit dem größeren hydraulischen Bremsdruck würde bei einer Betätigung der hydraulischen Bremsanlage dazu führen, dass das Abrissventil gemäß dem Stand der Technik u. U. auch dann die zweite gedrosselte Betriebsstellung einnehmen würde, wenn die Bremssteuerleitung keinen Defekt aufweist. Sofern also die Beaufschlagung einer Steuerfläche mit dem hydraulischen Bremsdruck des Zugfahrzeugs erfolgen sollte, sind Anpassungen des Ventilkörpers, insbesondere mit Verringerung der von dem hydraulischen Bremsdruck beaufschlagten ersten Steuerfläche gegenüber der mit dem von Anhängersteuerventil ausgesteuerten Bremsdruck beaufschlagten zweiten Steuerfläche, und/oder Anpassungen der Federkennlinie und/oder der Vorspannung der dem Ventilkörper beaufschlagenden Feder erforderlich. Hinzu kommt, dass eine Anpassung der Steuerflächen und der weiteren zugeordneten Bauteile und Funktionsflächen, insbesondere des Ventilgehäuses mit der Ausbildung des von der genannten Steuerfläche begrenzten Steuerraumes, je nach den jeweiligen hydraulischen Bremsdrücken der hydraulischen Bremsanlagen des Zugfahrzeugs, in welcher das Abrissventil Einsatz finden soll, erforderlich wäre, wodurch die Bauteilvielfalt und hierdurch bedingt die Kosten für die Herstellung, Bevorratung und Montage erhöht würden.

Die Erfindung schlägt ein Abrissventil vor, welches bestimmt ist für den Einsatz in einer Bremsanlage eines hydraulisch gebremsten Zugfahrzeugs und eines mit dem Zugfahrzeug gekoppelten pneumatisch gebremsten Anhängers. Das erfindungsgemäße Abrissventil verfügt über einen hydraulischen Steueranschluss für den hydraulischen Bremsdruck des Zugfahrzeugs, welchem also je nach Auslegung der hydraulischen Bremsanlage des Zugfahrzeugs ein hydraulischer Bremsdruck beispielsweise im Bereich von 10 bar bis 100 bar zugeführt werden kann. Des Weiteren verfügt das Abrissventil über einen pneumatischen Steueranschluss, dem ein pneumatischer Bremsdruck zugeführt wird, der von einem Anhängersteuerventil des Zugfahrzeugs ausgesteuert wird und über die Bremssteuerleitung mit dem Kupplungskopf Bremse dem Anhänger zugeführt werden kann. Das Abrissventil verfügt darüber hinaus über einen Vorratsanschluss, der mit einem Vorratsbehälter des Zugfahrzeugs verbindbar ist, sowie einen Ausgangsanschluss, der mit dem Kupplungskopf Vorrat verbindbar ist.

Das Abrissventil verfügt auch über einen Ventilkörper. Der Ventilkörper ist in Richtung einer ersten Betriebsstellung von dem Druck an dem pneumatischen Steueranschluss beaufschlagt. In entgegengesetzter Richtung, nämlich in Richtung einer zweiten Betriebsstellung, ist der Ventilkörper mit einer Umschaltkraft beaufschlagt. Diese Umschaltkraft ist von dem Druck an dem hydraulischen Steueranschluss abhängig. Durch das Abrissventil ist in der zweiten Betriebsstellung der Vorratsanschluss mit einem kleineren Drosselquerschnitt mit dem Ausgangsanschluss verbunden als in der ersten Betriebsstellung, sodass (wie grundsätzlich zuvor bereits erläutert wurde) in der zweiten Betriebsstellung die Nachversorgung des Anhängers somit stark gedrosselt wird, wodurch der Einfall der Notbremse des Anhängers verhältnismäßig schnell herbeigeführt wird.

Erfindungsgemäß verfügt das Abrissventil über eine Adapterkolbenfläche, an welcher der Druck an dem hydraulischen Steueranschluss die Umschaltkraft erzeugt. Hierbei ist die Adapterkolbenfläche gezielt an den jeweils für das Zugfahrzeug wirkenden hydraulischen Bremsdruck angepasst. Vorzugsweise ist die Größe der Adapterkolbenfläche derart bemessen, dass der Druck an dem hydraulischen Steueranschluss an der Adapterkolbenfläche eine Umschaltkraft mit einem Betrag erzeugt, welche kleiner ist als die Summe aus
- der Kraft einer den Ventilkörper in Richtung der ersten Betriebsstellung beaufschlagenden Feder in der ersten Betriebsstellung und
- der Kraft, welche der Druck an dem pneumatischen Steueranschluss auf den Ventilkörper ausübt.

Vorzugsweise ist die Adapterkolbenfläche kleiner als die Steuerfläche, die mit dem von dem Anhängersteuerventil ausgesteuerten pneumatischen Bremsdruck beaufschlagt ist. Um lediglich ein nicht beschränkendes Beispiel zu nennen, ist die Adapterkolbenfläche ungefähr um denselben Faktor kleiner als die mit dem von dem Anhängersteuerventil ausgesteuerten pneumatischen Bremsdruck beaufschlagte Steuerfläche des Ventilkörpers wie der Faktor, um welchen der hydraulische Bremsdruck des Zugfahrzeugs größer ist als der von dem Anhängersteuerventil des Zugfahrzeugs ausgesteuerte pneumatische Bremsdruck.

Durchaus möglich ist, dass bei dem erfindungsgemäßen Abrissventil die Adapterkolbenfläche, auf welche der hydraulische Bremsdruck wirkt, von dem Ventilkörper selber ausgebildet ist. In diesem Fall kann der Ventilkörper auch als Stufenkolben ausgebildet sein, bei welchem der pneumatische Druck auf eine Stirnseite des Stufenkolbens wirkt, während der hydraulische Druck auf eine andere, u. U. kleinere Stirnseite des Stufenkolbens wirkt. Ebenfalls möglich ist, dass der hydraulische Druck lediglich auf eine Ringfläche des Steuerkolbens wirkt, welche dann die Adapterkolbenfläche bildet.

Für einen besonderen Vorschlag der Erfindung ist allerdings ein Adapterkolben separat von dem Ventilkörper ausgebildet. Der Adapterkörper ist dann mechanisch mit dem Ventilkörper gekoppelt, um die Umschaltkraft auf den Ventilkörper zu übertragen. Die Adapterkolbenfläche ist in diesem Fall von dem Adapterkolben ausgebildet. Diese Ausgestaltung führt beispielsweise zu dem Vorteil, dass möglich ist, dass für Abrissventile in unterschiedlichen Einbaubedingungen, also insbesondere für Zugfahrzeuge mit unterschiedlichen hydraulischen Bremsdrücken und/oder verschiedenen hydraulischen Medien, derselbe Ventilkörper, ggf. auch mit denselben weiteren Komponenten, eingesetzt werden kann, während zur Anpassung an die unterschiedlichen hydraulischen Bremsdrücke und/oder hydraulischen Medien Adapterkolben mit unterschiedlichen Adapterkolbenflächen und/oder Dichtelementen für die verschiedenen hydraulischen Medien Einsatz finden können, womit der Gleichanteil erhöht wird und eine Verringerung der Herstellungskosten, des Bevorratungsaufwands und/oder des Montageaufwands ermöglicht ist. Möglich ist hierbei, dass der Adapterkolben lediglich lose an dem Ventilkörper anliegt, wobei dies unter Anpressung durch eine vorgespannte, bspw. den Ventilkörper beaufschlagende Feder erfolgen kann.

Grundsätzlich sind beliebige Gestaltungen des Gehäuses des Abrissventils möglich. Für einen erfindungsgemäßen Vorschlag ist ein Gehäuse des Abrissventils mit einem Ventilkörper-Gehäuse gebildet. In dem Ventilkörper-Gehäuse ist der Ventilkörper geführt und der von dem pneumatischen Bremsdruck beaufschlagte Steuerraum gebildet. Des Weiteren verfügt das Gehäuse über ein Adapter-Gehäuse. In dem Adapter-Gehäuse ist der Adapterkolben geführt und der von dem hydraulischen Bremsdruck beaufschlagte Steuerraum gebildet. Im einfachsten Fall sind das Ventilkörper-Gehäuse und das Adapter-Gehäuse zusammengeflanscht. In jedem Fall sind für diese Ausführungsform das Ventilkörper-Gehäuse und das Adapter-Gehäuse über eine mechanische Schnittstelle miteinander verbunden. Durch diese mechanische Schnittstelle erstreckt sich ein Stößel, welcher dann die Umschaltkraft von dem Adapterkolben zu dem Ventilkörper übertragen kann. Um lediglich ein nicht beschränkendes Beispiel zu nennen, kann die mechanische Schnittstelle mit zueinander fluchtenden Ausnehmungen des Ventilkörper-Gehäuses und des Adapter-Gehäuses gebildet sein, durch welche sich der Stößel erstreckt. Möglich ist, dass der Stößel von dem Adapterkolben oder Ventilkörper ausgebildet ist. Eine mechanische Verbindung zwischen dem Stößel und dem benachbarten Bauelement kann im einfachsten Fall lediglich mit einer Kontaktfläche gebildet sein, wobei dann für eine gemeinsame Bewegung des Adapterkolbens und des Ventilkörpers in die Umschaltrichtung die Umschaltkraft verantwortlich ist, während in entgegengesetzte Richtung die Bewegung durch die den Ventilkörper beaufschlagende Feder herbeigeführt wird.

Für die Bauart des Abrissventils gibt es grundsätzlich vielfältige Möglichkeiten. So kann beispielsweise das Abrissventil in Sitz-Ventilbauweise ausgebildet sein. In bevorzugter Ausgestaltung der Erfindung ist das Abrissventil in Schieberbauart ausgebildet. Hierbei kann auch die Drosselwirkung zwischen dem Ventilkörper, welcher in diesem Fall den Ventilschieber bildet, und der Aufnahmebohrung für den Ventilkörper herbeigeführt sein.

Eine weitere Lösung der der Erfindung zugrunde liegenden Aufgabe ist gegeben durch eine Gruppe mit Abrissventilen. Bei dieser Gruppe kann es sich beispielsweise um eine von einem Unternehmen hergestellte Gruppe mit Abrissventilen handeln. Ebenfalls kann es sich um eine von dem herstellenden Unternehmen oder einem Zwischenhändler für Abnehmer bereitgehaltene oder bevorratete Gruppe von Abrissventilen handeln. Möglich ist auch, dass eine derartige Gruppe mit Abrissventilen in einer Werkstatt, dem Unternehmen, welches mehrere Zugfahrzeuge herstellt oder betreibt u. ä., vorgehalten wird.

Die Gruppe der Abrissventile verfügt erfindungsgemäß über eine erste Teilgruppe mit Abrissventilen, welche eine erste Adapterkolbenfläche aufweisen. Die Abrissventile dieser ersten Teilgruppe sind bestimmt für eine erste Einbauumgebung, bei welcher es sich beispielsweise um einen ersten Zugfahrzeugtyp handelt, bei welchem erste hydraulische Bremsdrücke erzeugt werden. Des Weiteren verfügt erfindungsgemäß die Gruppe über eine zweite Teilgruppe mit Abrissventilen, welche eine zweite Adapterkolbenfläche aufweisen. Beispielsweise sind die Abrissventile der zweiten Teilgruppe für eine zweite Einbauumgebung, insbesondere einen zweiten Zugfahrzeugtyp bestimmt, bei welchem zweite hydraulische Bremsdrücke erzeugt werden, die von den ersten hydraulischen Bremsdrücken abweichen. Die Abrissventile der beiden unterschiedlichen Teilgruppen verfügen über unterschiedliche Adapterkolbenflächen, über welche dann die Anpassung an die jeweilige Einbaubedingung, insbesondere an den jeweiligen Zugfahrzeugtyp und an den ersten hydraulischen Bremsdruck bzw. den zweiten hydraulischen Bremsdruck, möglich ist. Für die Gruppe der Abrissventile kann somit eine Fertigung und Bevorratung mit einem hohen Gleichanteil erfolgen, wobei die Individualisierung der Abrissventile dann ausschließlich oder vorrangig durch die geeignete Wahl der Adapterkolbenfläche erfolgt.

Für eine besondere Ausgestaltung dieses Lösungsgedankens weisen die Abrissventile der beiden Teilgruppen gleiche Ventilkörper-Gehäuse und gleiche in den Ventilkörper-Gehäusen geführte Ventilkörper auf. In diesem Fall erfolgt die Individualisierung an die unterschiedlichen Einbaubedingungen, für welche die Abrissventile der unterschiedlichen Teilgruppen bestimmt sind, dadurch, dass die Abrissventile der ersten und zweiten Teilgruppe unterschiedliche Adapter-Gehäuse und unterschiedliche in den Adapter-Gehäusen geführte Adapterkolben aufweisen. Somit werden sämtliche Ventilkörper-Gehäuse und Ventilkörper für beide Teilgruppen in denselben Herstellungsprozessen hergestellt. Es kann auch eine Bevorratung der Ventilkörper-Gehäuse und Ventilkörper für beide Teilgruppen ohne unterschiedliche Kennzeichnung und Aufbewahrungsorte erfolgen. Hingegen werden unterschiedliche Adapter-Gehäuse und unterschiedliche in den Adapter-Gehäusen geführte Adapterkolben hergestellt mit anschließender separater Kennzeichnung der Adapter-Gehäuse und Adapterkolben für die unterschiedlichen Teilgruppen sowie u. U. unterschiedlicher Bevorratung derselben. Soll dann ein Abrissventil für eine bestimmte Einbauumgebung bereitgestellt werden, werden die einheitlich gefertigten und bevorrateten Ventilkörper-Gehäuse und Ventilkörper kombiniert mit den individualisierten Adapter-Gehäusen und Adapterkolben für die jeweilige Einbauumgebung.

Durchaus möglich ist, dass das Abrissventil eine singuläre Baueinheit bildet, welche beispielsweise an einem Rahmen oder anderweitigen Bauelement des Zugfahrzeugs gehalten ist und mit benachbarten Bauelementen über pneumatische und hydraulische Leitungen verbunden ist. Für einen besonderen Vorschlag der Erfindung wird vorgeschlagen, dass in einer Zugfahrzeug-Ventileinheit sowohl ein Anhängersteuerventil als auch ein Abrissventil, wie dieses zuvor erläutert worden ist, angeordnet sind. Hierbei dient das Anhängersteuerventil der Ausgabe eines Bremssteuerdruckes, welcher dem Kupplungskopf Bremse und damit dem Anhänger zugeführt wird, in Abhängigkeit von einem hydraulischen Betriebsbremsdruck, insbesondere in Abhängigkeit von den Betriebsbremsdrücken von zwei separaten hydraulischen Bremskreisen. In der Zugfahrzeug-Ventileinheit ist ein Steuerausgang des Anhängersteuerventils für einen pneumatischen Bremsdruck, welcher dem Kupplungskopf Bremse zugeführt wird, mit dem pneumatischen Steueranschluss des Abrissventils verbunden. Auf diese Weise kann eine besonders kompakte Zugfahrzeug-Ventileinheit geschaffen werden, in welcher unter Umständen Teile des Abrissventils für die unterschiedlichen Teilgruppen gleichgefertigt und bereitgestellt werden, während andere Teile wie das Adapter-Gehäuse und der Adapterkolben separat je nach Einbauumgebung gefertigt und bereitgestellt werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs *"mindestens"* bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert eine hydraulische und pneumatische Bremsanlage eines Zugfahrzeugs.
- **Fig. 2**: zeigt einen mittels eines Abrissventils herbeiführbaren Druckverlauf in einer Vorratsleitung bei einem Defekt in einer Bremssteuerleitung.
- **Fig. 3**: zeigt stark schematisiert einen Längsschnitt durch ein Abrissventil.
- **Fig. 4 bis 6**: zeigen stark schematisiert Längsschnitte für weitere Ausgestaltungen eines Abrissventils.

### FIGURENBESCHREIBUNG

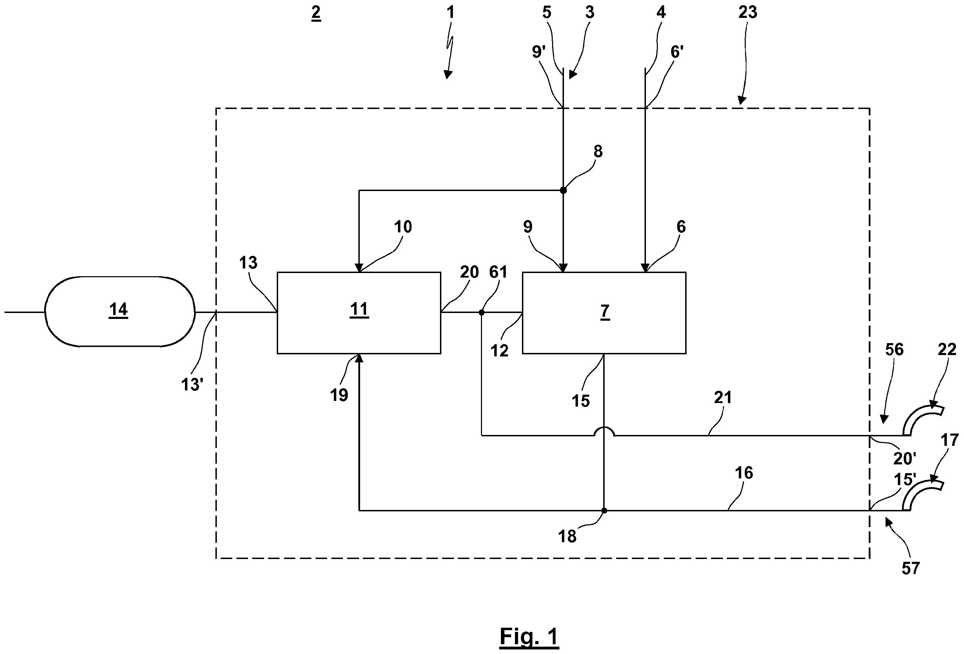

**Fig. 1** zeigt eine hydraulische und pneumatische Bremsanlage 1 eines Zugfahrzeugs 2, bei dem es sich vorzugsweise um einen Schlepper, insbesondere ein landwirtschaftliches Zugfahrzeug oder ein Traktor, handelt. Das Zugfahrzeug 2 weist eine hier zweikreisige hydraulische Bremsanlage 3 auf, von der in Fig. 1 lediglich die beiden hydraulischen Bremsleitungen 4, 5, die den beiden Kreisen zugeordnet sind, dargestellt sind. Die hydraulische Bremsleitung 4 ist mit einem hydraulischen Steueranschluss 6 eines Anhängersteuerventils 7 verbunden. Über eine Verzweigung 8 ist die hydraulische Bremsleitung 5 sowohl mit einem hydraulischen Steueranschluss 9 des Anhängersteuerventils 7 als auch einem hydraulischen Steueranschluss 10 eines Abrissventils 11 verbunden. Das Abrissventil 11 verfügt über einen Vorratsanschluss 13, der aus einem Vorratsbehälter 14 mit Druckluft versorgt wird. Das Anhängersteuerventil 7 verfügt über einen Ausgangsanschluss 15, an welchem über eine Bremssteuerleitung 16 ein Kupplungskopf Bremse 17 angeschlossen ist. Über eine Verzweigung 18 ist an den Ausgangsanschluss 15 des Anhängersteuerventils 7 auch ein pneumatischer Steueranschluss 19 des Abrissventils 11 angeschlossen. Das Abrissventil 11 verfügt über einen Ausgangsanschluss 20, der über eine Vorratsleitung 21 mit dem Kupplungskopf Vorrat 22 verbunden ist. Des Weiteren ist der Ausgangsanschluss 20 des Abrissventils 11 über eine Verzweigung 61 mit einem Anschluss 12 des Anhängersteuerventils 7 verbunden. Eine Versorgung des Anhängersteuerventils 7 aus dem Vorratsbehälter 14 erfolgt somit über das Abrissventil 11 parallel zu der Versorgung des Kupplungskopf Vorrats 22.

Möglich ist, dass das Anhängersteuerventil 7 und Abrissventil 11 als singuläre Bauelemente mit einzelnen Gehäusen bei beabstandeter Anordnung derselben ausgebildet sind. Für das in Fig. 1 dargestellte Ausführungsbeispiel sind das Anhängersteuerventil 7 und das Abrissventil 11 in eine Zugfahrzeug-Ventileinheit 23 integriert. Hierbei kann die Zugfahrzeug-Ventileinheit 23 modular ausgebildet sein, wobei das Anhängersteuerventil 7 und das Abrissventil 11 jeweils ein Modul bilden, die beispielsweise aneinander angeflanscht werden. Möglich ist aber auch, dass das Anhängersteuerventil 7 und das Abrissventil 11 in einem gemeinsamen Gehäuse aufgenommen sind. Die Zugfahrzeug-Ventileinheit 23 bildet in diesem Fall den hydraulischen Steueranschluss 6', den hydraulischen Steueranschluss 9', den Ausgangsanschluss 15', den Ausgangsanschluss 20', sowie den Vorratsanschluss 13' aus, über welche die Zugfahrzeug-Ventileinheit 23 (hier ausschließlich) mit benachbarten hydraulischen und pneumatischen Komponenten kommuniziert. Möglich ist aber auch, dass in die Zugfahrzeug-Ventileinheit 23 elektronische Steuerelemente wie eine elektronische Steuereinheit und/oder elektromagnetische Ventileinheiten integriert sind, wobei in diesem Fall die Zugfahrzeug-Ventileinheit 23 einen elektronischen Steueranschluss oder einen Anschluss für ein Bussystem wie CAN besitzen kann. Durchaus möglich ist des Weiteren, dass über innere Kanäle oder Leitungen ein mit einem Strich gekennzeichneter Anschluss 6', 9', 13', 15', 20' mit einem ohne Strich gekennzeichneten Anschluss 6, 9, 10, 13, 15, 20 des integrierten Anhängersteuerventils 7 und/oder Abrissventils 11 verbunden ist.

Die Funktionsweise der Bremsanlage 1 ist wie folgt: Zur Erzeugung einer Bremswirkung wird mindestens ein hydraulischer Bremsdruck in den hydraulischen Bremsleitungen 4, 5 erzeugt, mittels dessen hydraulische Brems-Aktuatoren des Zugfahrzeugs 2 betätigt werden. Möglich ist hierbei, dass der hydraulische Bremsdruck in den hydraulischen Bremsleitungen 4, 5 vorgegeben wird von dem Fahrer, beispielsweise über mindestens ein Bremspedal. Alternativ oder kumulativ möglich ist, dass eine automatische Erzeugung eines hydraulischen Bremsdrucks, insbesondere mit einer elektronischen Steuereinheit, erfolgt.

Aus den dem Anhängersteuerventil 7 über die hydraulischen Steueranschlüsse 6, 9 zugeführten Bremsdrücken erzeugt das Anhängersteuerventil 7 einen an dem Ausgangsanschluss 15 ausgesteuerten pneumatischen Bremssteuerdruck, welcher über die Bremssteuerleitung 16 dem Kupplungskopf Bremse 17 zugeführt wird. An den Kupplungskopf Bremse 17 ist ein entsprechender Gegen-Kupplungskopf des Anhängers angeschlossen, womit dann der pneumatischen Bremsanlage des Anhängers, welche Bestandteil der Bremsanlage 1 ist, der Bremssteuerdruck zugeführt wird. Das Anhängersteuerventil 7 erzeugt hierbei vorzugsweise einen Bremssteuerdruck derart, dass die an dem Anhänger herbeigeführte Bremswirkung der Bremswirkung des Zugfahrzeugs 2 entspricht. Zur Herbeiführung einer Streckbremsfunktion, die automatisch oder durch den Fahrer ausgelöst werden kann, kann das Anhängersteuerventil 7 auch temporär eine größere Bremswirkung an dem Anhänger herbeiführen als an dem Zugfahrzeug 2. Ebenfalls möglich ist, dass, u. U. verursacht durch den Fahrer oder eine elektronische Steuereinheit, eine Prüffunktion bei stehendem Fahrzeug ausgeführt wird, bei welcher das Zugfahrzeug 2 gebremst wird, während der Anhänger nicht gebremst wird.

Auf an sich bekannte Weise kann die Abhängigkeit des Bremssteuerdrucks an dem Ausgangsanschluss 15 von den hydraulischen Bremsdrücken an den Steueranschlüssen 6, 9 und weiteren Betriebsbedingungen angepasst werden, wenn ein weiterer pneumatischer Steueranschluss, insbesondere zur Herbeiführung einer sogenannten Voreilung, vorhanden ist. Ebenfalls möglich ist, dass eine Modifikation eines pneumatischen Steuerdrucks des Anhängersteuerventils 7 über ein elektronisch gesteuertes Steuerventil erfolgt und/oder das Anhängersteuerventil 7 einen von einer elektronischen Steuereinrichtung angesteuerten elektrischen Steueranschluss besitzt, vgl. insbesondere EP 2 165 901 B1 und EP 2 305 524 B1.

Die Bremssteuerleitung 16 ist mit einem Bremsleitungsteil 57, dem Kupplungskopf Bremse 17, dem Gegenkupplungskopf Bremse (nicht dargestellt) und dem anhängerseitigen Teil der Bremssteuerleitung (nicht dargestellt) gebildet. Die Vorratsleitung 16 ist mit einem Vorratsleitungsteil 56, dem Kupplungskopf Vorrat 22, dem Gegenkupplungskopf Vorrat (nicht dargestellt) und dem anhängerseitigen Teil der Vorratsleitung (nicht dargestellt) gebildet.

Kommt es zu einem Defekt in der Bremssteuerleitung 16, worunter bspw. ein Abriss des Kupplungskopfs 17 in dem anhängerseitigen Teil der Bremssteuerleitung verstanden wird, kommt es im Fall einer Bremsbetätigung mit einer Öffnung des Anhängersteuerventils 7 zu einer Entlüftung der Vorratsleitung 21 durch das Anhängersteuerventil 7 hindurch über den Defekt in der Bremssteuerleitung 16, womit grundsätzlich ein schneller Abfall des Drucks in der Vorratsleitung 21 möglich wäre mit einer entsprechend schnellen Aktivierung der Notbremsfunktion des Anhängerbremsventils. Allerdings ist die Vorratsleitung 21 auch über das Abrissventil 11 mit dem Vorratsbehälter 14 verbunden, womit eine Nachspeisung von Druckluft aus dem Vorratsbehälter 14 in die Vorratsleitung 21 erfolgt. Die Schnelligkeit des Abfalls des Drucks in der Vorratsleitung 21 ergibt sich somit aus der Differenz der über den Defekt in der Bremssteuerleitung 16 entweichenden Druckluft und der aus dem Vorratsbehälter 14 nachgeführten Druckluft. Ist in dem Defektfall eine zweite Betriebsstellung des Abrissventils 11 wirksam, in welcher die Nachspeisung der Druckluft aus dem Vorratsbehälter 14 in die Vorratsleitung 21 unter Zwischenordnung einer Drossel erfolgt, führt diese gedrosselte Nachspeisung zu einem schnelleren Abfall des Drucks in der Vorratsleitung 21, womit ein früheres Ansprechen der Notbremsfunktion des Anhängerbremsventils des Anhängers herbeigeführt werden kann. Letztendlich kann somit über die Vorgabe der Drosselwirkung in der zweiten Betriebsstellung des Abrissventils 11 der Abfall des Drucks in der Vorratsleitung 21 und die Schnelligkeit des Ansprechens der Notbremsfunktion des Anhängers konstruktiv vorgegeben werden.

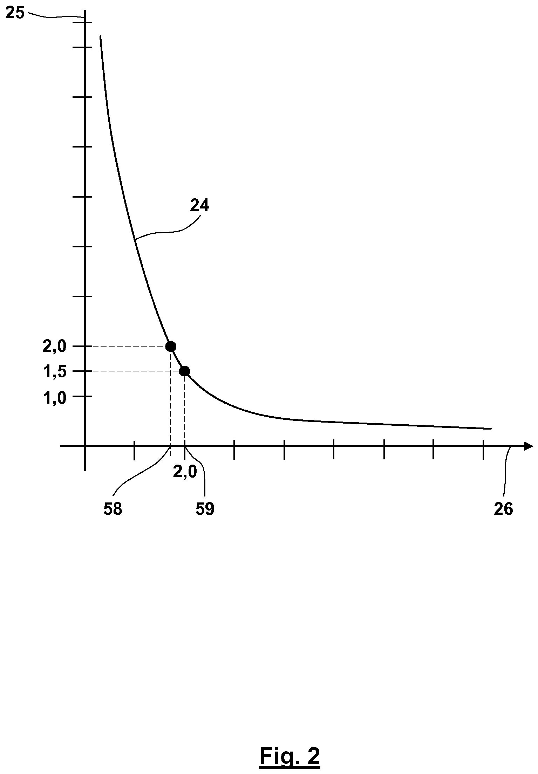

**Fig. 2** zeigt einen Verlauf 24 des Drucks 25 in der Vorratsleitung 21 über der Zeit 26 bei einem Defekt in der Bremssteuerleitung 16. Hierbei sind die Steigung und die Kurvenform des Verlaufs 24 abhängig von der Drosselwirkung des Abrissventils 11 in der zweiten Betriebsstellung.

In der Norm *"*Delegierte Verordnung" der Europäischen Kommission 2015/68 vom 15.10.2014, veröffentlicht am 23.01.2015 im Amtsblatt der Europäischen Union, ist für den Verlauf 24 vorgeschrieben, dass der Druck in der Vorratsleitung 21 innerhalb von zwei Sekunden auf einen Wert von 150 kPa (1,5 bar) abfallen muss. Des Weiteren muss das Auslösen der Notbremsfunktion des Anhängers einsetzen, bevor der Druck in der Vorratsleitung auf 200 kPa (2,0 bar) abgefallen ist, sofern der Druck in der Vorratsleitung um mindestens 100 kPa (1,0 bar) pro Sekunde sinkt. Die Auslegung der Drosselwirkung in der zweiten Betriebsstellung erfolgt derart, dass der Abfall des Drucks in der Vorratsleitung mit der vorgeschriebenen Geschwindigkeit erfolgen kann. Andererseits gewährleistet das Abrissventil 11, dass die Notbremsfunktion des Anhängerbremsventils ausgelöst wird, bevor der Druck in der Vorratsleitung 21 auf 2 bar abgefallen ist.

Zu erkennen ist in Fig. 2, dass erfindungsgemäß mit dem Unterschreiten eines Drucks von 2,0 bar zu einem Zeitpunkt 58 < 2 Sek. eine Auslösung der Notbremsfunktion mit der Initiierung der automatischen Bremsung des Anhängers erfolgt. Zu dem Zeitpunkt 59, welcher spätestens nach 2 Sek. erreicht sein muss, ist der Druck von 1,5 bar erreicht.

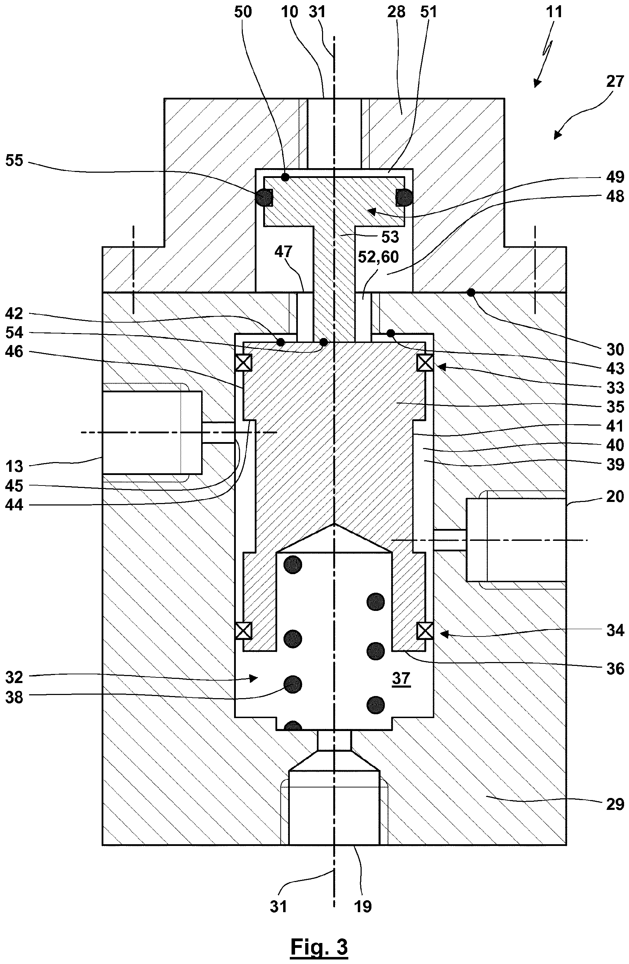

Das Abrissventil 11 gemäß **Fig. 3****,** bei welchem es sich vorzugsweise um ein Schlepper-Abrissventil handelt, besitzt ein Gehäuse 27. Das Gehäuse 27 ist mit einem Adapter-Gehäuse 28 und einem Ventilkörper-Gehäuse 29 gebildet. Das Adapter-Gehäuse 28 und das Ventilkörper-Gehäuse 29 sind in einem Kopplungs- oder Flanschbereich 30 miteinander verbunden.

Das Ventilkörper-Gehäuse 30 besitzt koaxial zu seiner Längsachse 31 den pneumatischen Steueranschluss 19. Der Vorratsanschluss 13 und der Ausgangsanschluss 20 sind hier lateral zur Längsachse 31 orientiert und an dem Ventilkörper-Gehäuse 29 hinsichtlich der Längsachse 31 versetzt und auf gegenüberliegenden Seiten von der Längsachse 31 angeordnet. Das Ventilkörper-Gehäuse 29 bildet einen koaxial zur Längsachse 31 orientierten Innenraum 32 mit zylindrischer Innenfläche aus. Der Vorratsanschluss 13, der pneumatische Steueranschluss 19 und der Ausgangsanschluss 20 münden in den Innenraum 32. In dem Innenraum 32 ist unter Abdichtung mittels Dichtelementen 33, 34 in beiden axialen Endbereichen ein Ventilkörper 35 gleitend geführt. Im Mündungsbereich des Steueranschlusses 19 in den Innenraum 32 begrenzt eine Stirnfläche 36 des Ventilkörpers 35 einen Steuerraum 37, welcher mit dem Druck an dem Steueranschluss 19 beaufschlagt ist. Eine vorzugsweise vorgespannte Feder 38 beaufschlagt den Ventilkörper 35 in dieselbe Richtung wie der an der Stirnfläche 36 wirkende Druck in dem Steuerraum 37. In der in Fig. 3 dargestellten ersten Betriebsstellung besitzt der Steuerraum 37 sein maximales Volumen, womit der Ventilkörper 35 maximal von dem Boden des Steuerraums 37 weg bewegt ist und die Feder 38 die geringste Vorspannung besitzt. In dieser ersten Betriebsstellung ist der Vorratsanschluss 13 über einen ersten Übertrittsquerschnitt 39 mit dem Ausgangsanschluss 20 verbunden. Für das dargestellte Ausführungsbeispiel wird der erste Übertrittsquerschnitt 39 gebildet von einem Ringspalt 40 zwischen dem Ventilkörper 35 und dem Ventilkörper-Gehäuse 29. Für das dargestellte Ausführungsbeispiel entsteht der Ringspalt 40 infolge einer hier um die Längsachse 31 umlaufenden Nut 41 des Ventilkörpers 35. Gemäß Fig. 3 ist die erste Betriebsstellung vorgegeben dadurch, dass der Ventilkörper 35 mit der der Stirnfläche 36 gegenüberliegenden Stirnfläche 42 zur Anlage kommt an einen Absatz oder Bund 43 des Ventilgehäuses 29, mit welchem der Innenraum 32 begrenzt ist.

Bewegt sich der Ventilkörper 35 von der ersten Betriebsstellung in die zweite Betriebsstellung, womit sich die Stirnfläche 42 von dem Absatz 43 entfernt, sich die Beaufschlagung der Feder 38 vergrößert und der Steuerraum 37 sein Volumen verkleinert, überfährt eine Steuerkante 44 des Ventilkörpers 35, welche hier von der Begrenzung der Nut 41 ausgebildet ist, eine Mündung 45 des Vorratsanschlusses 13. Auf der der Nut 41 abgewandten Seite der Steuerkante 44 besitzt der Ventilkörper 35 einen gegenüber dem Nutgrund der Nut 41 vergrößerten Durchmesser. Hat somit die Steuerkante 44 die Mündung 35 passiert, erfolgt der Übertritt von Druckluft zwischen dem Vorratsanschluss 13 und dem Ausgangsanschluss 20 über einen Ringspalt 46, welcher zwischen der Mantelfläche des Ventilkörpers und dem Ventilkörper-Gehäuse 29 ausgebildet ist. Die Höhe des Ringspalts 46, welche in der zweiten Betriebsstellung wirksam ist, ist kleiner als die Höhe des Ringspalts 40, welche in der ersten Betriebsstellung wirksam ist. Der Ringspalt 40 bildet eine Drossel für den Übertritt der Druckluft zwischen dem Vorratsanschluss 13 und dem Ausgangsanschluss 20. Durch diese Drossel erfolgt in der zweiten Betriebsstellung eine (größere) Drosselung des Übertritts der Druckluft zwischen dem Vorratsanschluss 13 und dem Ausgangsanschluss 20 als dies in der ersten Betriebsstellung der Fall ist. Die Entlüftung der Vorratsleitung 21 über das Anhängersteuerventil 7 und die Bremssteuerleitung 16 wird infolge der Drosselung der Nachführung von Druckluft aus dem Vorratsbehälter 14 über das Abrissventil 11 in der zweiten Betriebsstellung nur eingeschränkt ausgeglichen. Je größer somit die Drosselwirkung in dem Abrissventil 11 konstruktiv vorgegeben ist, umso schneller erfolgt der Druckabfall in der Vorratsleitung 21 und damit die Auslösung der Notbremsfunktion.

Für das rein pneumatisch gesteuerte Abrissventil "*G 813*: *2*/*2-Wegeventil pneum. betätigt mit Drosselstellung NW 7*/*NW* 2" gemäß dem eingangs genannten Stand der Technik bildet das Ventilkörper-Gehäuse 29 einen zweiten pneumatischen Steueranschluss 47 aus, welcher dann in einen Steuerraum mündet, welcher auf der dem Steuerraum 37 abgewandten Seite des Ventilkörpers 35 gebildet ist und durch die Stirnfläche 42 und das Ventilkörper-Gehäuse 29 begrenzt ist. Hingegen ist gemäß Fig. 3 der hydraulische Steueranschluss 10 koaxial zur Längsachse 31 an dem Adapter-Gehäuse 28 ausgebildet. Der Steueranschluss 47 mündet in einen Innenraum 48 des Adapter-Gehäuses 28 mit zylindrischer Innenfläche. In dem Innenraum 48 ist gleitend unter Abdichtung durch ein Dichtelement 55 ein Adapterkolben 49 in Richtung der Längsachse 41 geführt. Zwischen einer Adapterkolbenfläche 50 des Adapterkolbens 49 und dem Adapter-Gehäuse 28 ist ein Steuerraum 51 ausgebildet, in welchem die Adapterkolbenfläche 50 mit dem Druck an dem hydraulischen Steueranschluss 10 beaufschlagt ist. Der Innenraum 48 des Adapter-Gehäuses 28 ist in Richtung des Ventilkörper-Gehäuses 29 offen, wobei der Innenraum 48 des Adapter-Gehäuses 28 über eine koaxial zur Längsachse 31 angeordnete Ausnehmung 52, hier eine Bohrung, des Ventilkörper-Gehäuses 29 mit dem Innenraum 32 des Ventilkörper-Gehäuses 29 verbunden ist. Die Ausnehmung 52 bildet eine mechanische Schnittstelle 60 zwischen dem Adapterkolben 49 und dem Adapter-Gehäuse 28 einerseits und dem Ventilkörper-Gehäuse 29 mit dem Ventilkörper 35 andererseits. Der Adapterkolben 49 ist über das Dichtelement 55 gegenüber dem Adapter-Gehäuse 28 abgedichtet. Für das dargestellte Ausführungsbeispiel bildet der Adapterkolben 49 integral auf der dem Ventilkörper 35 zugewandten Seite einen Stößel 53 aus. Der Stößel 53 erstreckt sich durch die Ausnehmung 52 und die mechanische Schnittstelle 60 und liegt mit seiner Stirnseite 54 an der Stirnfläche 42 des Ventilkörpers 35 an. Ein sich radial außenliegend von dem Stößel 53 ausbildender Raum, welcher in Richtung der Längsachse einerseits durch das Dichtelement 33 sowie andererseits durch das Dichtelement 55 begrenzt ist, ist auf nicht näher dargestellte Weise entlüftet.

Die Größe der Adapterkolbenfläche 50 des Adapterkolbens 49 ist derart bemessen, dass bei an dem Steueranschluss 10 anliegendem hydraulischem Bremsdruck die erzeugte Umschaltkraft, welche über den Kontakt der Stirnseite 54 des Stößels übertragen wird auf die Stirnfläche 42 des Ventilkörpers 35, ungefähr genauso groß ist wie die Kraft, die der Druck an dem pneumatischen Steueranschluss 19 an der Stirnfläche 36 des Ventilkörpers 35 erzeugt. Infolge der Wirkung der Feder 38 verbleibt somit das Abrissventil 11 in der ersten Betriebsstellung gemäß Fig. 3 sowohl, wenn an dem Steueranschluss 10 der hydraulische Bremsdruck anliegt mit gleichzeitig an den pneumatischen Steueranschluss 19 anliegendem Bremssteuerdruck als auch für einen Betriebszustand, in welchem keine Bremswirkung angestrebt wird, womit weder an dem Steueranschluss 10 hydraulischer Bremsdruck anliegt noch an dem pneumatischen Steueranschluss 19 der Bremssteuerdruck anliegt. Hingegen fällt für den Defekt in der Bremssteuerleitung 16 der Druck an dem pneumatischen Steueranschluss 19 ab. Ohne Bremswunsch, also ohne hydraulischen Bremsdruck an dem hydraulischen Steueranschluss 10, verbleibt das Abrissventil 11 infolge der Wirkung der Feder 38in der in Fig. 3 dargestellten ersten Betriebsstellung. Wird dann aber bei defekter Bremssteuerleitung 16, beispielsweise über eine Betätigung eines Bremspedals, ein hydraulischer Bremsdruck erzeugt, führt der hydraulische Bremsdruck an dem hydraulischen Steueranschluss 10 in dem Steuerraum 51 mit der Beaufschlagung der Adapterkolbenfläche 50 zu einer Umschaltkraft an dem Adapterkolben 49, die über den Stößel 53 auf den Ventilkörper 35 übertragen wird. Die Adapterkolbenfläche 50 des Adapterkolbens 49 ist derart bemessen, dass die hier erzeugte Umschaltkraft größer ist als die Kraft der Feder 38, sodass eine Verschiebung des Ventilkörpers 35 von der ersten Betriebsstellung gemäß Fig. 3 weg in die zweite Betriebsstellung erfolgt.

Um Abrissventile 11a, 11b zu bilden, welche für die Nutzung in Verbindung mit einer hydraulischen Bremsanlage von Zugfahrzeugen 2 mit unterschiedlichen (maximalen) hydraulischen Bremsdrücken genutzt werden können, erfolgt die Nutzung gleicher Ventilkörper-Gehäuse 29 mit zugeordneten gleichen Federn 38 und gleichen Ventilkörpern 35 in Verbindung mit unterschiedlichen Adapter-Gehäusen 28 und zugeordneten Adapterkolben 49, deren Adapterkolbenflächen 50 jeweils an die unterschiedlichen hydraulischen Bremsdrücke und/oder hydraulischen Medien angepasst sind. Möglich ist sogar, dass (neben der Nutzung desselben Ventilkörpers 35 mit derselben Feder 38 und desselben Ventilkörper-Gehäuses 29 in Verbindung mit unterschiedlichen Adapterkolben 49 und Adapter-Gehäusen 28) auch ein Ventilkörper-Gehäuse 29 mit Feder 38 sowie Ventilkörper 35 unverändert Einsatz findet ohne Adapter-Kolben 49 und Adapter-Gehäuse 28, wobei dann der pneumatische Steueranschluss 47 des Ventilkörper-Gehäuses 29 genutzt werden kann, insbesondere für einen pneumatischen Bremsdruck eines Zugfahrzeugs mit pneumatischer Bremsanlage.

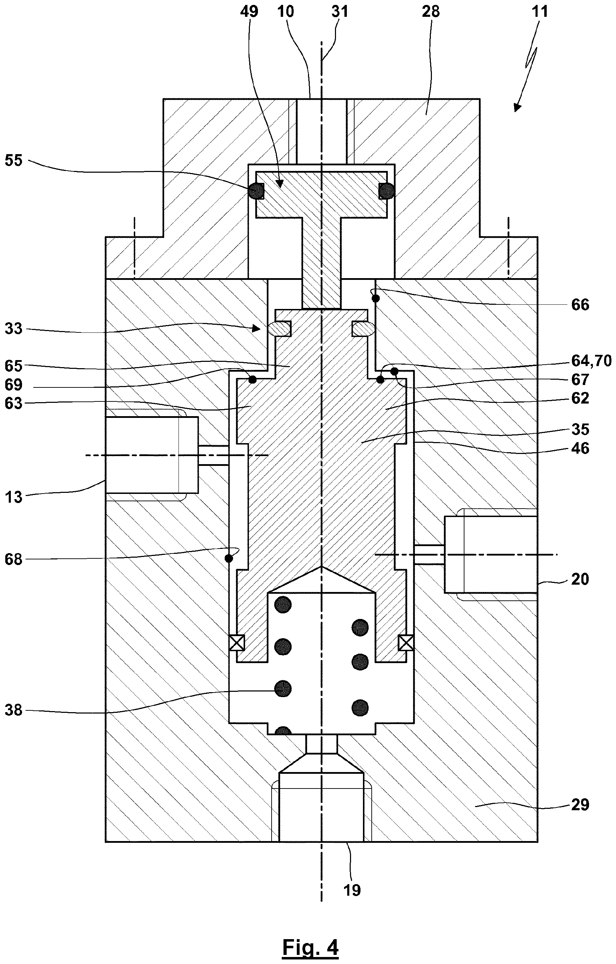

Für das Ausführungsbeispiel gemäß **Fig.** 4 ist der Ventilkörper 35 des Abrissventils 11 als Stufenkolben 62 ausgebildet. Der Stufenkolben 62 verfügt über einen ersten Durchmesserbereich 63, welcher über einen Absatz 64 übergeht in einen zweiten, kleineren Durchmesserbereich 65. Der kleinere Durchmesserbereich 65 ist unter Zwischenordnung des Dichtelements 33 abgedichtet in einer entsprechenden Bohrung 66 des Ventilkörper-Gehäuses 29 geführt. Die Bohrung 66 geht über einen Absatz 67 über in die den Innenraum 32 begrenzende Bohrung 68, wobei zwischen dem zweiten Durchmesserbereich 65 und der Bohrung 67 der Ringspalt 46 ausgebildet wird. Auch hier bildet der Ringspalt 46 in der in Fig. 4 nicht wirksamen Betriebsstellung eine Drossel hinsichtlich des Übertritts von Druckluft von dem Vorratsanschluss 13 zu dem Ausgangsanschluss 20 aus. Andererseits steht der Vorratsanschluss 13 über den Ringspalt (vorzugsweise weitestgehend unabhängig von der Betriebsstellung des Ventilkörpers 35) in pneumatischer Verbindung mit einem zusätzlichen pneumatischen Steuerraum 69, welcher axial zwischen den Absätzen 64, 67 gebildet ist und radial außen liegend von der Bohrung 68 und radial innen liegend von dem Durchmesserbereich 65 begrenzt ist. Der Absatz 64 des Ventilkörpers 35 bildet in diesem Fall eine von dem (über den Ringspalt 46 gedrosselten) Druck an dem Vorratsanschluss 13 beaufschlagte ringförmige Steuerfläche 70 aus, welche in Abhängigkeit des Drucks an dem Vorratsanschluss 13 den Ventilkörper 35 in Fig. 4 nach unten, also in Richtung einer zusätzlichen Beaufschlagung der Feder 38, beaufschlagt. Über die Dimensionierung der Steuerfläche 70 ist eine zusätzliche Beeinflussung der Kraftverhältnisse an dem Abrissventil 11 möglich.

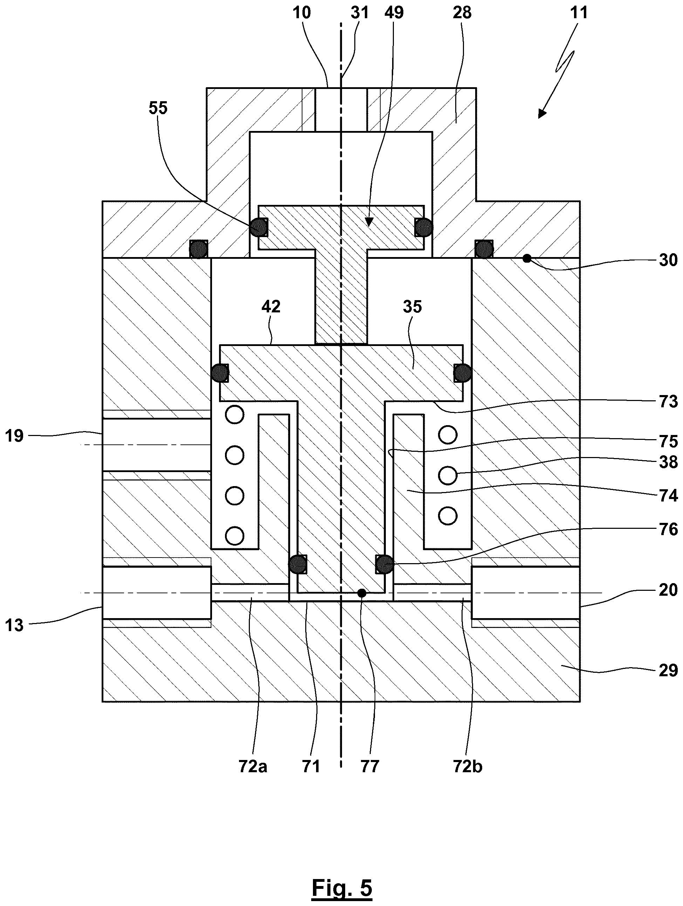

Für die Ausführungsbeispiele gemäß Fig. 3 und 4 ist der Ventilkörper 35 als eine Art Schieberventil ausgebildet, bei welchem die Drossel über den Ringspalt 46 des Ventilkörpers 35 mit der Bohrung des Ventilkörper-Gehäuses 29 ausgebildet ist und eine Aktivierung der Drossel durch das Überfahren der Mündung 45 mit der Steuerkante 44 erfolgt ist. **Fig.** 5 zeigt ein Ausführungsbeispiel, bei welchem der Ventilkörper 35 je nach Betriebsstellung einen Übertrittsraum 71 zwischen dem Vorratsanschluss 13 und dem Ausgangsanschluss 20 mehr oder weniger verengt oder in diesen eintritt. Für das Ausführungsbeispiel gemäß Fig. 5 sind grundsätzlich das Adapter-Gehäuse 28 und der darin angeordnete Adapterkolben 49 entsprechend dem Ausführungsbeispiel gemäß Fig. 3 ausgebildet. An dem Ventilkörper-Gehäuse 29 sind aber die pneumatischen Anschlüsse 13, 19, 20 lateral zur Längsachse 31 orientiert. Hierbei sind der Vorratsanschluss 13 und der Ausgangsanschluss 20 in derselben Querebene angeordnet und über Verbindungskanäle 72a, 72b unter Zwischenschaltung des Übertrittsraums 71 miteinander verbindbar.

Auf der dem Adapterkolben 49 zugewandten Seite dieser Querebene ist der pneumatische Steueranschluss 19 angeordnet. Der Druck an dem pneumatischen Steueranschluss 19 beaufschlagt hier die dem Adapterkolben 49 abgewandte Ringfläche 73 des Ventilkörpers 35. Der Ventilkörper 35 ist in diesem Fall in seinem Längsschnitt T-förmig ausgebildet. Der Querschenkel des T bildet auf der einen Seite die Stirnfläche 42 aus, an welcher der Adapterkolben 49 anliegt. Die andere Seite des Querschenkels des T bildet die Ringfläche 73 aus. Der Vertikalschenkel des T erstreckt sich auf der dem Adapterkolben 49 abgewandten Seite. Das Ventilkörper-Gehäuse 29 bildet eine hier hülsenartige Aufnahme 74 aus, welche eine zylindrische Ausnehmung 75 besitzt. In der Ausnehmung 75 ist der Vertikalschenkel des T unter Zwischenordnung eines Dichtelements 76 abgedichtet geführt. Im unteren Endbereich der Ausnehmung 75 münden in diese die Verbindungskanäle 72a, 72b. Der Übertrittsraum 71 ist begrenzt durch einerseits den Bodenbereich der Ausnehmung 75 sowie andererseits durch die Stirnseite 77 des Vertikalschenkels des T des Ventilkörpers 35. Je nach Stellung des Ventilkörpers 35 kann somit die Querschnittsfläche des Übertrittsraums 71 verändert werden, womit zwischen dem Vorratsanschluss 13 und dem Ausgangsanschluss 20 eine von der Betriebsstellung des Ventilkörpers 35 abhängige Drosselwirkung erzeugt werden kann.

In der in Fig. 5 nicht wirksamen ersten Betriebsstellung sind die Kraft der Feder 38 sowie die an der Ringfläche 73 erzeugte Kraft infolge des Drucks an dem pneumatischen Steueranschluss 19 größer als die entgegengesetzt wirkende Kraft des Adapterkolbens 49, welche infolge der hydraulischen Beaufschlagung des hydraulischen Steueranschlusses 10 erzeugt wird. Somit befindet sich der Ventilkörper 35 in einer gegenüber der in Fig. 5 dargestellten Betriebsstellung angehobenen Position, in welcher ein maximaler Übertrittsquerschnitt des Übertrittsraums 71 freigegeben ist. Bricht hingegen der Druck an dem pneumatischen Steueranschluss 19 ein, ist die Kraft, mit welcher der Adapterkolben 49 den Ventilkörper 35 nach unten drückt, größer als die entgegengesetzt wirkende Kraft der Feder 38 (und u. U. eine Restkraft infolge eines Restdrucks, welcher auf die Ringfläche 73 wirkt). Somit wird der Ventilkörper 35 in die in Fig. 5 dargestellte zweite Betriebsstellung überführt, in welcher die wirksame Querschnittsfläche des Übertrittsraums 71 gegenüber der ersten Betriebsstellung so reduziert ist, dass sich eine Drosselung oder erhöhte Drosselung ergibt.

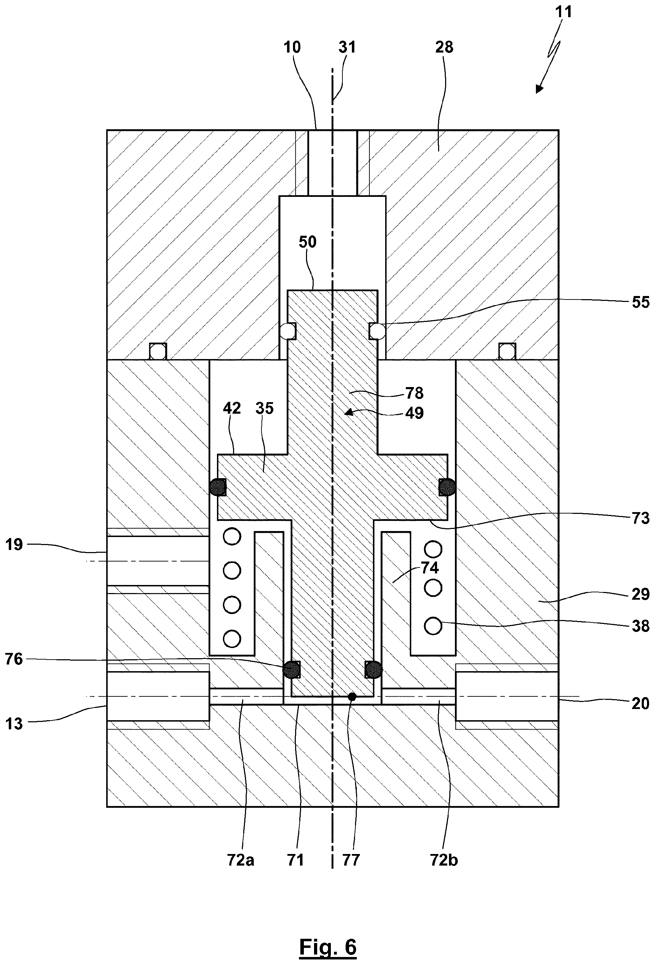

Für das in **Fig. 6** dargestellte Ausführungsbeispiel sind das Ventilkörper-Gehäuse 29 und der Ventilkörper 35 mit dessen Integration in das Ventilkörper-Gehäuse 29 grundsätzlich entsprechend Fig. 5 ausgebildet. Allerdings ist hier der Adapterkolben 49 nicht separat von dem Ventilkörper 35 ausgebildet. Vielmehr ist der Adapterkolben 49 in diesem Fall integral mit dem Ventilkörper 35 ausgebildet, indem sich von dem Horizontalschenkel des T des Ventilkörpers 35 auf der dem Vertikalschenkel des T abgewandten Seite ein hier zylindrischer Fortsatz 78 erstreckt, welcher den Adapterkolben 49 bildet. Der Fortsatz 78 ist unter Abdichtung mittels des Dichtelements 55 in dem Adapter-Gehäuse 28 geführt, wobei in diesem Fall die Stirnfläche des Adapterkolbens 49 und damit des Ventilkörpers 35 von dem hydraulischen Steuerdruck des hydraulischen Steueranschlusses 10 beaufschlagt ist.

Möglich ist u. U., dass auch bei einem Defekt des Abrissventils 11, welcher altersbedingt, verschleißbedingt und/oder korrosionsbedingt sein kann oder auf einem Bruch der Feder 38 beruhen kann, ohne Defekt des Bremsteuerungs-Leitungszweigs 57 durchaus ein weiterer (Not-) Betrieb der Bremsanlage 1 möglich ist, während dessen sich das Abrissventil durchaus in der zweiten Betriebsstellung befinden kann. Während dieses Betriebs erfolgt dann eine gedrosselte Kommunikation zwischen dem Vorratsbehälter 14 und dem Vorrats-Leitungszweig 56.

### BEZUGSZEICHENLISTE

- 1: Bremsanlage
- 2: Zugfahrzeug
- 3: hydraulische Bremsanlage
- 4: hydraulische Bremsleitung
- 5: hydraulische Bremsleitung
- 6: hydraulischer Steueranschluss
- 7: Anhängersteuerventil
- 8: Verzweigung
- 9: hydraulischer Steueranschluss
- 10: hydraulischer Steueranschluss
- 11: Abrissventil
- 12: Anschluss
- 13: Vorratsanschluss
- 14: Vorratsbehälter
- 15: Ausgangsanschluss
- 16: Bremssteuerleitung
- 17: Kupplungskopf Bremse
- 18: Verzweigung
- 19: pneumatischer Steueranschluss
- 20: Ausgangsanschluss
- 21: Vorratsleitung
- 22: Kupplungskopf Vorrat
- 23: Zugfahrzeug-Ventileinheit
- 24: Verlauf
- 25: Druck
- 26: Zeit
- 27: Gehäuse
- 28: Adapter-Gehäuse
- 29: Ventilkörper-Gehäuse
- 30: Kopplungs- oder Flanschbereich
- 31: Längsachse
- 32: Innenraum
- 33: Dichtelement
- 34: Dichtelement
- 35: Ventilkörper
- 36: Stirnfläche
- 37: Steuerraum
- 38: Feder
- 39: erster Übertrittsquerschnitt
- 40: Ringspalt
- 41: Nut
- 42: Stirnfläche
- 43: Absatz
- 44: Steuerkante
- 45: Mündung
- 46: Ringspalt
- 47: pneumatischer Steueranschluss
- 48: Innenraum
- 49: Adapterkolben
- 50: Adapterkolbenfläche
- 51: Steuerraum
- 52: Ausnehmung
- 53: Stößel
- 54: Stirnseite
- 55: Dichtelement
- 56: Vorrats-Leitungszweig
- 57: Bremssteuerungs-Leitungszweig
- 58: Zeitpunkt
- 59: Zeitpunkt
- 60: Schnittstelle
- 61: Verzweigung
- 62: Stufenkolben
- 63: Durchmesserbereich
- 64: Absatz
- 65: Durchmesserbereich
- 66: Bohrung
- 67: Absatz
- 68: Bohrung
- 69: Steuerraum
- 70: Steuerfläche
- 71: Übertrittsraum
- 72: Verbindungskanal
- 73: Ringfläche
- 74: Aufnahme
- 75: Ausnehmung
- 76: Dichtelement
- 77: Stirnseite
- 78: Fortsatz

## Patentansprüche

1. Abrissventil (11) für eine Bremsanlage (1) eines hydraulisch gebremsten Zugfahrzeugs (2) und eines mit dem Zugfahrzeug (2) gekoppelten pneumatisch gebremsten Anhängers
a) mit einem hydraulischen Steueranschluss (10) für einen hydraulischen Bremsdruck des Zugfahrzeugs (2),
b) mit einem pneumatischen Steueranschluss (19) für einen von einem Anhängersteuerventil (7) des Zugfahrzeugs (2) ausgesteuerten pneumatischen Bremsdruck,
c) mit einem Vorratsanschluss (13), der mit einem Vorratsbehälter (14) des Zugfahrzeugs (2) verbindbar ist,
d) mit einem Ausgangsanschluss (20) für einen Kupplungskopf Vorrat (22),
e) mit einem Ventilkörper (35), welcher in Richtung einer ersten Betriebsstellung von dem Druck an dem pneumatischen Steueranschluss (19) beaufschlagt ist und in entgegengesetzter Richtung in Richtung einer zweiten Betriebsstellung mit einer Umschaltkraft beaufschlagt ist, welche von dem Druck an dem hydraulischen Steueranschluss (10) abhängig ist,
f) wobei der Vorratsanschluss (13) in der zweiten Betriebsstellung über einen kleineren Drosselquerschnitt mit dem Ausgangsanschluss (20) verbunden ist als in der ersten Betriebsstellung, und
g) mit einer Adapterkolbenfläche (50), an welcher der Druck an dem hydraulischen Steueranschluss (10) die Umschaltkraft erzeugt.

2. Abrissventil (11) nach Anspruch 1, **dadurch gekennzeichnet, dass** ein separat von dem Ventilkörper (35) ausgebildeten Adapterkolben (49) vorhanden ist, welcher
a) zur Übertragung der Umschaltkraft mechanisch mit dem Ventilkörper (35) gekoppelt ist und
b) die Adapterkolbenfläche (50) ausbildet.

3. Abrissventil (11) nach Anspruch 2, **dadurch gekennzeichnet, dass** ein Gehäuse (27) mit einem Ventilkörper-Gehäuse (29) gebildet ist, in welchem der Ventilkörper (35) geführt ist, und mit einem Adapter-Gehäuse (28) gebildet ist, in welchem der Adapterkolben (49) geführt ist, wobei das Ventilkörper-Gehäuse (29) und das Adapter-Gehäuse (28) über eine mechanische Schnittstelle (60) miteinander verbunden sind, durch welche sich ein Stößel (53) erstreckt, der die Umschaltkraft überträgt.

4. Abrissventil (11) nach einem der vorhergehenden Ansprüche, **dadurch gekennzeichnet, dass** das Abrissventil (11) in Schieberbauart ausgebildet ist.

5. Gruppe mit Abrissventilen (11) nach einem der Ansprüche 1 bis 4,
a) mit einer ersten Teilgruppe mit Abrissventilen (11), welche eine erste Adapterkolbenfläche (50) aufweisen und
b) mit einer zweiten Teilgruppe mit Abrissventilen (11), welche eine zweite Adapterkolbenfläche (50) aufweisen,
c) wobei die erste und die zweite Adapterkolbenfläche (50) unterschiedlich groß sind.

6. Gruppe mit Abrissventilen (11) nach Anspruch 5, **dadurch gekennzeichnet, dass** die Abrissventile (11) der ersten und zweiten Teilgruppe
- gleiche Ventilkörper-Gehäuse (29) und gleiche in den Ventilkörper-Gehäusen (29) geführte Ventilkörper (35) aufweisen, aber
- unterschiedliche Adapter-Gehäuse (28) und unterschiedliche in den Adapter-Gehäusen (28) geführte Adapterkolben (49) aufweisen.

7. Zugfahrzeug-Ventileinheit (23) mit einem Anhängersteuerventil (7) und einem Abrissventil (11) nach einem der Ansprüche 1 bis 4, wobei ein Ausgangsanschluss (15) des Anhängersteuerventils (7) für einen pneumatischen Bremsdruck mit dem pneumatischen Steueranschluss (19) des Abrissventils (11) verbunden ist.

## Claims

1. Emergency valve (11) for a brake system (1) of a hydraulically braked tractor (2) and a pneumatically braked trailer coupled to the tractor (2),
a) comprising a hydraulic control port (10) for a hydraulic brake pressure of the tractor (2),
b) comprising a pneumatic control port (19) for a pneumatic brake pressure controlled by a trailer control valve (7) of the tractor (2),
c) comprising a supply port (13) which can be connected to a supply reservoir (14) of the tractor (2),
d) comprising an outlet port (20) for a supply coupling head (22),
e) comprising a valve body (35) which is biased towards a first operating position by the pressure at the pneumatic control port (19) and which is biased in opposite direction towards a second operating position with a switching force which depends on the pressure at the hydraulic control port (10),
f) the supply port (13) being connected in the second operating position by a smaller throttling cross section to the outlet port (20) than in the first operating position and
g) comprising an adapter piston surface (50) at which the pressure at the hydraulic control port (10) generates the switching force.

2. Emergency valve (11) of claim 1, **characterised in that** an adapter piston (49) is provided which is formed separately from the valve body (35) and which
a) is mechanically coupled to the valve body (35) for the transfer of the switching force and
b) forms the adapter piston surface (50).

3. Emergency valve (11) of claim 2, **characterised in that** a housing (27) comprises a valve body housing (29) wherein the valve body (35) is guided and an adapter housing (28) wherein the adapter piston (49) is guided, the valve body housing (29) and the adapter housing (28) being connected with each other by a mechanical interface (60) through which a tappet (53) extends which transmits the switching force.

4. Emergency valve (11) according to one of the preceding claims, **characterised in that** the emergency valve (11) is embodied in the sliding valve constructional type.

5. Group of emergency valves (11) according to one of claims 1 to 4
a) comprising a first group part with emergency valves (11) having a first adapter piston surface (50) and
b) comprising a second group part with emergency valves (11) having a second adapter piston surface (50),
c) the first and second adapter piston surfaces (50) having different sizes.

6. Group of emergency valves (11) of claim 5, **characterised in that** the emergency valves (11) of the first and second group parts
- comprise the same valve body housings (29) and the same valve bodies (35) being guided in the valve body housings (29) but
- different adapter housings (28) and different adapter pistons (49) being guided in the adapter housings (28).

7. Tractor valve unit (23) comprising a trailer control valve (7) and an emergency valve (11) according to one of claims 1 to 4, an outlet port (15) of the trailer control valve (7) for a pneumatic brake pressure being connected to the pneumatic control port (19) of the emergency valve (11).

## Revendications

1. Soupape de rupture (11) pour une installation de freinage (1) d'un véhicule tracteur freiné hydrauliquement (2) et d'une remorque freinée pneumatiquement couplée au véhicule tracteur (2),
a) avec un raccord de commande hydraulique (10) pour une pression de freinage hydraulique du véhicule tracteur (2),
b) avec un raccord de commande pneumatique (19) pour une pression de freinage pneumatique contrôlée par une soupape de commande de remorque (7) du véhicule tracteur (2),
c) avec un raccord de réservoir (13) qui peut être relié avec un réservoir (14) du véhicule tracteur (2),
d) avec un raccord de sortie (20) pour un réservoir de tête de couplage (22),
e) avec un corps de soupape (35) qui est sollicité en direction d'une première position de fonctionnement par la pression au niveau du raccord de commande pneumatique (19) et dans le sens inverse en direction d'une deuxième position de fonctionnement avec une force de commutation, qui dépend de la pression au niveau du raccord de commande hydraulique (10),
f) le raccorde de réservoir (13) étant relié, dans la deuxième position de fonctionnement, avec le raccord de sortie (20) par l'intermédiaire d'une section d'étranglement plus petite que dans la première position de fonctionnement et
g) avec une surface de piston adaptateur (50) au niveau de laquelle la pression au niveau du raccord de commande hydraulique (10) génère la force de commutation.

2. Soupape de rupture (11) selon la revendication 1, **caractérisée en ce qu'**un piston adaptateur (49) réalisé séparément du corps de soupape (35) est prévu, qui
a) est couplé mécaniquement au corps de soupape (35) pour la transmission de la force de commutation et
b) forme la surface de piston adaptateur (50).

3. Soupape de rupture (11) selon la revendication 2, **caractérisée en ce qu'**un boîtier (27) est formé avec un boîtier de corps de soupape (29), dans lequel le corps de soupape (35) est guidé, et formé avec un corps d'adaptateur (28), dans lequel le piston adaptateur (49) est guidé, le boîtier de corps de soupape (29) et le boîtier d'adaptateur (28) étant reliés entre eux par l'intermédiaire d'une interface mécanique (60), à travers laquelle s'étend un poussoir (53) qui transmet la force de commutation.

4. Soupape de rupture (11) selon l'une des revendications précédentes, **caractérisée en ce que** la soupape de rupture (11) est conçue sous la forme d'un coulisseau.

5. Groupe avec des soupapes de rupture (11) selon l'une des revendications 1 à 4,
a) avec un premier groupe partiel avec des soupapes de rupture (11) qui comprennent une première surface de piston adaptateur (50) et
b) avec un deuxième groupe partiel avec des soupapes de rupture (11) qui comprennent une deuxième surface de piston adaptateur (50),
c) la première et la deuxième surfaces de pistons adaptateurs (50) étant de tailles différentes.

6. Groupe avec des soupapes de rupture (11) selon la revendication 5, **caractérisé en ce que** les soupapes de rupture (11) des premier et deuxième groupes partiels
- comprennent les mêmes boîtiers de corps de soupapes (29) et les même corps de soupapes (35) guidés dans les boîtiers de corps de soupapes (29) mais
- des boîtiers adaptateurs (28) différents et différents pistons adaptateurs (49) guidés dans les boîtiers adaptateurs (28).

7. Unité à soupape de véhicule tracteur (23) avec une soupape de commande de remorque (7) et une soupape de rupture (11) selon l'une des revendications 1 à 4, un raccord de sortie (15) de la soupape de commande de remorque (7) pour une pression de freinage pneumatique étant relié au raccord de commande pneumatique (19) de la soupape de rupture (11).
